# EUROPÄISCHE PATENTANMELDUNG

(11) **EP 1 842 659 A2**
(43) Veröffentlichungstag der Anmeldung: **10.10.2007**
(21) Anmeldenummer: 07013843.3
(22) Anmeldetag: 17.04.2003
(51) Int. Cl.: B30B 1/18, B30B 15/00, B30B 11/02

(54) **Presse**

(30) Priorität: 25.04.2002 DE 10218633
(62) Teilanmeldung aus: 03727318.2
(71) Anmelder: TMD Friction Services GmbH, 51381 Leverkusen (DE)
(72) Erfinder: Hogenkamp, Wolfgang, 42855 Remscheid (DE); Reineke, Ulrich, 51491 Overath (DE)
(74) Vertreter: Müller, Eckhard

(57) **Zusammenfassung**

Die Erfindung betrifft eine Presse zum Herstellen von harzgebundenen Pressteilen mit mindestens einer Pressstation, die eine obere und eine untere Traverse (9, 14) sowie eine Pressform (15, 16, 18) und einen mit dieser zusammenwirkenden Pressstempel (19) aufweist, und mit Linearantrieben (4, 10) zum Erzeugen von Relativbewegungen und Schließkräften zwischen den Traversen (9, 14) sowie zum Erzeugen von Relativbewegungen und Spannkräften zwischen der Pressform (15, 16, 18) und dem Pressstempel (19). Die Linearantriebe sind als Spindelantriebe (4, 10) mit je mindestens einer Spindel (5, 12) und einer zugehörigen Spindelmutter (7, 13) ausgebildet, deren Relativdrehung zur Erzeugung der Relativbewegungen und der Spann- sowie Schließkräfte dient und von einem Motor, insbesondere von einem Elektromotor (6, 11) antreibbar ist, und zwischen der Spindel und der Spindelmutter sind vorzugsweise kraftübertragende Wälzkörper angeordnet (Fig. 1).

## Beschreibung

Die Erfindung betrifft eine Presse zum Herstellen von harzgebundenen Pressteilen, insbesondere von Reibbelägen für Brems- oder Kupplungsbeläge, mit mindestens einer Pressstation, die eine obere und eine untere Traverse sowie eine Pressform und einen mit dieser zusammenwirkenden Pressstempel aufweist, und mit Linearantrieben zum Erzeugen von Relativbewegungen und Spann- sowie Schliesskräften zwischen der Form und dem Pressstempel.

Aus der Praxis bekannte Pressen dieser Art weisen als Linearantrieb eine hydraulische Kolbenarbeitsmaschine auf, die von einem Hydrauliksystem gespeist wird. Es wurde gefunden, dass die Steuerung eines solchen Linearantriebs verbesserungsfähig ist.

Der Erfindung liegt daher die Aufgabe zugrunde, die Antriebssteuerung der Presse zu verbessern.

Zur Lösung dieser Aufgabe ist die eingangs genannte Presse erfindungsgemäss dadurch gekennzeichnet, dass der Linearantrieb als Spindelantrieb mit mindestens einer Spindel und einer zugehörigen Spindelmutter ausgebildet ist, deren Relativdrehung zur Erzeugung der Relativbewegungen und der Spann- sowie Schliesskräfte dient und von einem Motor, insbesondere von einem Elektromotor antreibbar ist, wobei zwischen der Spindel und der Spindelmutter vorzugsweise kraftübertragende Wälzkörper angeordnet sind.

Die Erfindung löst sich also vom System des hydraulischen Antriebs und geht auf einen mechanischen, insbesondere einen elektromechanischen Antrieb über.

Als wesentlicher Vorteil ist zu nennen, dass der mechanische Spindelantrieb ohne zusätzlichen Aufwand eine Kraftspreizung über einen weiten Bereich ermöglicht. Hydrauliksysteme sind hier auf unterschiedlich große Zylinder und unterschiedliche Druckstufen des Hydrauliksystems angewiesen, die aufwendig geschaltet werden müssen. Auch lassen sich über den Spindelantrieb hohe Fahrgeschwindigkeiten ohne weiteres mit großen Zuspannkräften kombinieren, wobei die Fahrgeschwindigkeit über die Drehzahl des Motors gesteuert wird.

Hydrauliksysteme benötigen auch hierfür unterschiedlich große Zylinder und/oder unterschiedliche Druckbereiche (Niederdruck für schnelles, kraftarmes Verfahren, Hochdruck zum Aufbringen der eigentlichen Presskraft). Ferner ermöglicht der Spindelantrieb eine Feinsteuerung, wie sie bei einer hydraulischen Arbeitsmaschine deshalb nicht erzielbar ist, weil dort beim Anfahren ein Losbrechmoment überwunden werden muss und die Reibungswiderstände von Dichtungen und Hydrauliksystemkomponenten sich über die Betriebszeiten ändern.

Hervorzuheben ist ferner, dass der Spindelantrieb mit einem höheren Gesamtwirkungsgrad arbeitet als ein hydraulisches Antriebssystem. Es entfallen die Strömungsverluste der Hydraulikpumpe und des nachgeschalteten Hydrauliknetzes.

Auch bedarf der Spindelantrieb keines Permanentbetriebes, wie er bei einem Hydrauliksystem erforderlich ist. Dort muss die Pumpe auch dann den Systemdruck aufrechterhalten, wenn keine Energie abgerufen wird. Schließlich sind bei einem Hydrauliksystem erhebliche Reibungswiderstände zwischen den Kolbendichtungen und dem Zylinder zu überwinden. Die Kraftübertragung zwischen der Spindelmutter und der Spindel hin gegen ist extrem reibungsarm, insbesondere bei Einsatz der zwischengeschalteten Wälzkörper.

Hydrauliksysteme sind naturgemäß mit einer gewissen Leckage verbunden. Die austretenden Flüssigkeiten sind umweltschädlich und müssen aufgefangen (Ölwanne) und ggf. als Sondermüll entsorgt werden. Hinzu kommt, dass sich diese Flüssigkeiten, wenn sie mit den Reibbelägen in Berührung treten, äußerst nachteilig auf deren Qualität auswirken. Sie können sogar zu einem Sicherheitsrisiko führen. Aus diesen Gründen werden Hydraulikaggregate in der Regel unterhalb der Produktionswerkzeuge installiert. Dabei ist es jedoch nachteilig, dass diese Bauteile in erheblichem Maße den aggressiven Werkstoffstäuben ausgesetzt sind. Diese Stäube können durch die Dichtungen hindurch in das Hydrauliksystem eindringen und durch Erhöhung des Verschleißes Schädigungen hervorrufen. Der Spindelantrieb hingegen lässt sich wirksam gegen das Austreten etwaiger Schmiermittel abschirmen.

Vor allen Dingen besitzt der Spindelantrieb den großen Vorteil einer einfach zu verwirklichenden, sehr exakten wegabhängigen Steuerung. Die Verdichtungswege lassen sich sehr präzise einstellen. Bei Belagschrumpfung kann nachgefahren oder aber die Zuspannposition gehalten werden. Damit erreichen Reibbelagpressen das Genauigkeitsniveau von CNC-gesteuerten Werkzeugmaschinen. Auch ist eine Umschaltung von wegabhängiger auf kraftabhängige Steuerung problemlos möglich, und zwar ganz im Gegensatz zu hydraulischen Systemen, die hierzu eine aufwendige, elektrohydraulische Regelung benötigen. Bei dem Spindelantrieb ist eine Feinsteuerung der Wege und Kräfte ohne weiteres möglich. Neben der Positioniergenauigkeit wird eine hohe Wiederholgenauigkeit (2,5/100 mm) gewährleistet. Hierdurch lassen sich Reibbeläge in einem sehr engen Kompressibilitätsband herstellen, wie es insbesondere für zukünftige elektromechanische Bremsanlagen in Kraftfahrzeugen benötigt wird. Die kraft- und wegorientierte Feinsteuerung ermöglicht auch eine präzise Einstellung der Porosität.

Das hohe Maß an Kraftspreizung führt, wie erwähnt, zu engen Toleranzbereichen und damit zu entsprechend geringem Ausschuß. Es ermöglicht eine rasche Formgebung unter hoher Kraft und sodann eine feindosierte Wegänderung unter minimalen, sich ändernden Kraftanforderungen. Dabei ist eine individuelle Abstimmung auf das jeweilige Produkt und die jeweilige Produktsituation möglich. Die Kraft- und Wegregelung lässt sich dynamisch gestalten. Da Steuerung, Antrieb und Sensorik auf elektrischer Basis funktionieren, ist eine direkte Kommunikation ohne Umweg über die hydraulische Energieform möglich.

Der mechanische Antrieb arbeitet mit wenigen, einfachen Bauteilen. Da keine durch Strömungsverluste erzeugte Abwärme abzuführen ist, bedarf es keiner entsprechenden Kühlanlage.

Auch sonstige Nebenaggregate entfallen, so dass eine kompakte Bauweise mit geringem Platzaufwand erzielt wird. Auch der Wartungsaufwand ist gering.

Schließlich sei noch erwähnt, dass die über den Spindeltrieb erzielbare hohe Fahrgeschwindigkeit geringe Taktzeiten ermöglicht. Dennoch arbeitet die Presse leise, ohne dass es einer Schalldämmung bedürfte.

Eine besonders einfache Steuerung des Spindelantriebs wird dadurch ermöglicht, dass der Pressform ein Kraftsensor und der Spindel oder dem die Spindel antreibenden Motor ein Drehwinkelsensor zugeordnet ist. Bei Verwendung von Synchronmotoren können über die Steuerung die eingespeisten Impulse registriert werden, um vorgegebene Wege gezielt und reproduzierbar zu fahren.

Grundsätzlich besteht die Möglichkeit, entweder die Spindel oder die Spindelmutter über den Motor anzutreiben.

Eine besonders vorteilhafte Ausführungsform ist dadurch gekennzeichnet, dass die Spindel mit dem Motor verbunden ist und dass die Spindelmutter ein die Relativbewegungen und die Spann- sowie Schließkräfte erzeugendes Schub- und Zugelement betätigt. Der Motor ist bevorzugt direkt an die Spindel an geflanscht, was zu einer besonders kompakten Bauweise führt.

Als alternative Ausführungsform wird vorgeschlagen, dass die Spindelmutter eine Verzahnung trägt, die mit einem von dem Motor drehbaren Antriebszahnrad in Eingriff steht.

Für die Verzahnung der Spindelmutter und die Ausbildung des Antriebszahnrades kommen grundsätzlich beliebige Zahnradpaarungen in Frage. Eine bevorzugte Ausführungsform allerdings kennzeichnet sich dadurch, dass die Spindelmutter eine Kegelradverzahnung trägt und dass das Antriebszahnrad als Kegelrad ausgebildet ist. Dies ermöglicht eine besonders kompakte Konstruktion, da sich die Achsen der Zahnräder kreuzen. Letzteres gilt auch dann, wenn die Spindelmutter eine Schneckenradverzahnung trägt und das Antriebszahnrad als Schnecke ausgebildet ist. Als weiterer Vorteil dieser Konstruktion kommt hinzu, dass der Antrieb selbsthemmend ist, so dass auf eine zusätzliche Bremse verzichtet werden kann.

Die zwischen der Spindel und der Spindelmutter angeordneten Wälzkörper ermöglichen nicht nur eine reibungsarme Kraftübertragung, sondern lassen auch die Erzeugung hoher Zuspannkräfte zu. Dies gilt insbesondere dann, wenn die Wälzkörper als Gewinderollen ausgebildet sind (Planetenrollengewindetrieb). Eine Ausbildung als Kugeln kommt eben falls in Frage, wobei allerdings deren Führung aufwendig ist. Auch müssen die kraftübertragenden Gewindegänge grober ausgebildet sein als im Falle von Gewinderollen.

Zu den Relativbewegungen zwischen der Form und dem Pressstempel gehören auch solche Bewegungen, die zur Entgasung des Reibmaterials dienen. Im übrigen besteht ein weiteres vorteilhaftes Merkmal darin, dass zusätzliche Funktionen der Reibbelagpresse, wie Ausstoßen des Belags, Ausheben des Belags aus Profilteilen zum Entgasen etc. von dem Spindelan trieb oder von zusätzlichen motorischen Spindelantrieben betätigbar sind.

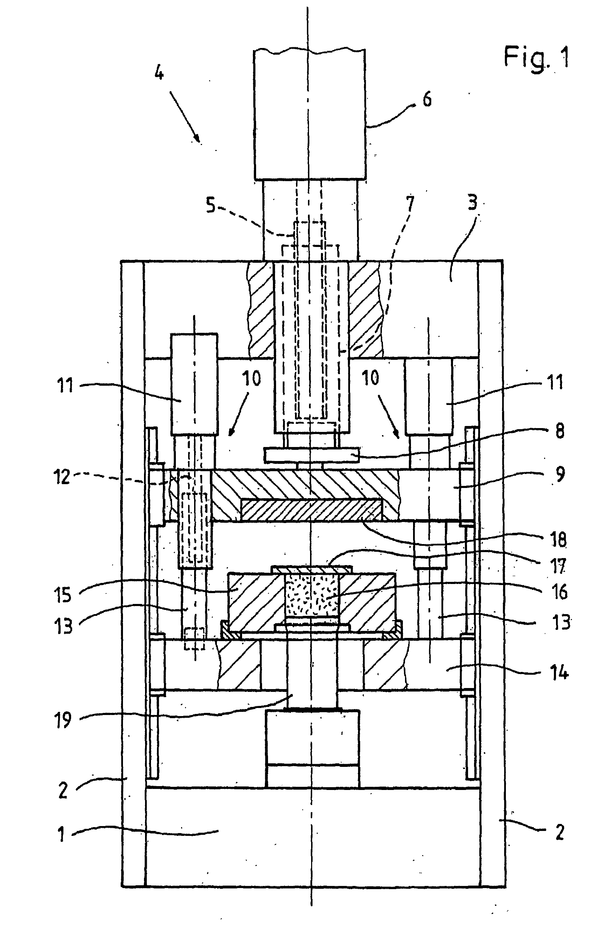

Die Erfindung wird im Folgenden anhand eines bevorzugten Ausführungsbeispiels im Zusammenhang mit der beiliegenden Zeichnung näher erläutert. Die Zeichnung zeigt in: Figur 1 eine zum Teil geschnittene Vorderansicht einer Reibbelagpresse nach der Erfindung.

Die Reibbelagpresse nach Figur 1 weist eine Basis 1, einen aus zwei Seitenteilen 2 bestehenden, vertikalen Rahmen und einen den Rahmen abschließenden oberen Träger 3 auf.

Am oberen Träger 3 ist ein Spindeltrieb 4 befestigt. Er weist eine Spindel 5 auf, die mit einem Elektromotor 6 verbunden ist und von diesem angetrieben wird. Auf der Spindel 5 läuft eine Spindelmutter 7, die über ein Schub und Zugelement 8 mit einer oberen Traverse 9 verbunden ist.

Zwischen der Spindel 5 und der Spindelmutter 7 sind kraftübertragende Wälzkörper in Form von Kugeln oder Gewinderollen angeordnet, die einen reibungsarmen Betrieb gewährleisten.

Die Traverse 9 ist in den Seitenteilen 2 des Rahmens geführt und wird vom Spindelantrieb 4 in vertikaler Richtung bewegt. An der oberen Traverse sind zwei gleichartig ausgebildete Spindelantriebe 10 befestigt, die jeweils einen Elektromotor 11, eine mit diesem verbundene Spindel 12 und eine zugehörige Spindelmutter 13 aufweisen. Die Spindelantriebe 10, die unter Zwischenschaltung von kraftübertragenden Wälzkörpern ebenfalls reibungsarm arbeiten, sind mit einer unteren Traverse 14 verbunden, die ebenfalls in den Seitenteilen 2 des Rahmens geführt ist und von den Spindelantrieben 10 relativ zur oberen Traverse 9 aufwärts und abwärts bewegt werden kann.

Auf der unteren Traverse 14 ist ein Profilteil 15 einer zweiteiligen Pressform angeordnet. Der Profilteil 15 bildet einen Formhohlraum, der mit Reibmaterial 16 gefüllt ist und von einer Reibbelag-Trägerplatte 17 abgedeckt wird.

In den Formhohlraum ragt ein stationärer Pressstempel 19 hinein.

Der zweite Teil der Pressform wird von einer Spiegelplatte 18 gebildet, die in der oberen Traverse 9 gelagert ist.

Figur 1 zeigt die Position der Reibbelagpresse vor Beginn des Pressvorgangs. Dieser wird dadurch gestartet, dass die obere Traverse 9 unter gleichzeitiger Betätigung der Spindelantriebe 4 und 10 abgesenkt wird, wobei die untere Traverse 14 ihre Position beibehält. Sobald die Spiegelplatte 18 der oberen Traverse 9 die Trägerplatte 17 berührt hat, erzeugen die beiden Spindelantriebe 10 die erforderliche Schließkraft, um die beiden Teile der Pressform miteinander zu verklammern. Eine Fortsetzung der Betätigung des Spindelantriebs 4 erzeugt die eigentliche Presskraft, mit der die geschlossene Pressform nach unten gegen den stationären Pressstempel 19 bewegt wird. Dieser wandert in den Formhohlraum hinein und komprimiert das Reibmaterial 16.

Im Zuge des Pressvorgangs kann es erforderlich sein, das Reibmaterial zu entlüften. Dies geschieht dadurch, dass die Spindelantriebe 10 betätigt werden, um die untere Traverse 14 und damit den Profilteil 15 der Pressform nach unten zu bewegen. Die obere Traverse 9 macht diese Bewegung nicht mit, das heißt, die Spiegelplatte 18 hält die Trägerplatte 17 weiterhin in Kontakt mit dem Reibmaterial 16. Dabei kann die Presskraft gleich bleiben oder aber vermindert werden, um anschließend, nachdem der Profilteil 15 der Pressform wieder nach oben gefahren worden ist, erneut gesteigert zu werden, ggf. über den vorher eingestellten Wert hinaus.

Die erfindungsgemäß eingesetzten, elektromotorischen Spindelantriebe 4 und 10 ermöglichen es, die erforderlichen Fahrwege rasch und sehr exakt zurückzulegen. Die Steuerung kann weg- und/oder kraftabhängig erfolgen, und zwar mit äußerster Exaktheit. Es ergibt sich ein Höchstmaß an Genauigkeit, und zwar sowohl hinsichtlich der Abmaße als auch hinsichtlich der Porosität und der Kompressibilität der Reibbeläge.

Im Rahmen der Erfindung sind durchaus Abwandlungsmöglichkeiten gegeben. So können anstelle der dargestellten elektromotorischen Spindelantriebe solche eingesetzt werden, bei denen die Spindeln unter Zwischenschaltung eines Getriebes mit den Elektromotoren verbunden sind. Ggf. kann dann auf deren Umsteuerbarkeit verzichtet werden. Ferner besteht die Möglichkeit, die Spindelmuttern anzutreiben, wobei dann die Spindeln die Kraftübertragung besorgen. Dabei können die Spindelmuttern mit Verzahnungen versehen sein, in die angetriebene Antriebszahnräder eingreifen, seien es Kegelräder oder Schneckenräder. In jedem Fall können zwischen den Spindeln und den Spindelmuttern kraftübertragende Wälzkörper angeordnet sein, um einen reibungsarmen Antrieb zu gewährleisten. Der Wirkungsgrad ist entsprechend hoch, was zur Erhöhung des ohnehin günstigen Gesamtwirkungsgrades der Presse beiträgt. Als Wälzkörper kommen Gewinderollen oder Kugeln in Frage. Bei Kugeln bleibt die Selbsthemmung des Antriebs erhalten.

Ferner besteht die Möglichkeit, die Presskraft auf den Pressstempel einwirken zu lassen, während die Pressform unbeweglich gehalten wird. In diesem und auch in dem in Figur 1 dargestellten Fall kann sich der Formhohlraum auch unterhalb des Pressstempels befinden.

Die in Figur 1 dargestellte Reibbelagpresse verfügt lediglich über eine einzige Pressstation. Eine Hintereinanderschaltung einer Mehrzahl von Pressstationen ist gleichermaßen möglich.

Anstelle der bevorzugten Elektromotoren kommen auch andere Motoren in Frage, z. B. Hydraulikmotoren.

Hauptanwendungsgebiet der Erfindung ist die Herstellung von Reibbelägen für Brems- oder Kupplungsbeläge. Dementsprechend nimmt die Beschreibung auch vorwiegend auf Reibbelagpressen Bezug. Allerdings sei hervorgehoben, dass die Erfindung auf die Verarbeitung beliebiger, harzgebundener Pressmassen anwendbar ist, beispielsweise auf die Herstellung von Kohlebürsten für Elektromotoren.

Die Reibbelagpresse ermöglicht nicht nur die Herstellung von Reibbelägen allein, sondern auch die gleichzeitige Anbindung der Reibbeläge an zugehörige Trägerplatten, gegebenenfalls unter Zwischenschaltung einer Underlayer.

Vor allen Dingen eignet sich die Reibbelagspresse für ein Verfahren, bei dem Formgebung, Härten, Entlüften und Scorchen in einem einzigen Schritt durchgeführt werden. Nach dem Schließen der Form wird gegebenenfalls unter gleichzeitiger Erwärmung die Formgebung durchgeführt, d. h., es wird mit sehr hohem Pressdruck gearbeitet. Anschließend erfolgt das Härten, wobei der Druck vermindert und die Temperatur erhöht wird. Der Druck kann kraft- und/oder wegabhängig variiert werden. Gleichzeitig wird der Pressling entlüftet, indem man den beweglichen Profilteil der Pressform nach unten fährt, ohne dass der Druck zwischen der Spiegelplatte und dem Pressstempel aufgehoben werden muss. Die eingefangene Luft, die beim Abbinden des Harzes entstehenden Gase und der er zeugte Wasserdampf haben die Möglichkeit, in günstiger Weise radial aus dem Pressling auszutreten. Die Wärme für das Härten wird innerhalb des Reibbelags erzeugt, wobei man sich die Leitfähigkeit des Materials zunutze macht. Bei abgesenktem Profilteil sind die Spiegelplatte und der Pressstempel gegeneinander isoliert. Man kann also zwischen diesen Teilen einen elektrischen Stromfluss durch den Reibbelag hindurch erzeugen. Dies geschieht durch Einsatz einer Matrix von Elektroden auf der Reibseite des Belages. Die Elektroden sind abwechselnd entgegengesetzt gepolt, so dass gleichzeitig Stromflüsse im Nahbereich parallel zur Reibfläche erzeugt werden. Diese bewirken das gleichzeitige Scorchen.

## Patentansprüche

1. Presse zum Herstellen von harzgebundenen Pressteilen, insbesondere von Reibbelägen für Brems- oder Kupplungsbeläge, mit
- mindestens einer Pressstation, die eine obere und eine untere Traverse (9, 14) sowie eine Pressform (15, 16, 18) und einen mit dieser zusammenwirkenden Pressstempel (19) aufweist, und
- Linearantrieben (4, 10) zum Erzeugen von Relativbewegungen und Schließkräften zwischen den Traversen (9, 14) sowie zum Erzeugen von Relativbewegungen und Spannkräften zwischen der Pressform (15, 16, 18) und dem Pressstempel (19),
wobei
- die Linearantriebe als Spindelantriebe (4, 10) mit je mindestens einer Spindel (5, 12) und einer zugehörigen Spindelmutter (7, 13) ausgebildet sind, deren Relativdrehung zur Erzeugung der Relativbewegungen und der Spann- sowie Schließkräfte dient und von einem Motor, insbesondere von einem Elektromotor (6, 11) antreibbar ist, und
- zwischen der Spindel und der Spindelmutter vorzugsweise kraftübertragende Wälzkörper angeordnet sind.

2. Presse nach Anspruch 1, **dadurch gekennzeichnet, dass** eine wahlweise kraft- und/oder wegabhängig arbeitende Steuerung für den Motor (6, 11) vorgesehen ist.

3. Presse nach Anspruch 2, **dadurch gekennzeichnet, dass** die Steuerung einen der Pressform (15, 18) zugeordneten Kraftsensor und einen der Spindel (5, 12) oder dem die Spindel antreibenden Motor (6, 11) zugeordneten Drehwinkelsensor aufweist.

4. Presse nach einem der Ansprüche 1 bis 3, **dadurch gekennzeichnet, dass** die Spindel (5, 12) mit dem Motor (6, 11) verbunden ist und dass die Spindelmutter (7) ein die Relativbewegungen und die Spann- sowie Schließkräfte erzeugendes Schub- und Zugelement (8) betätigt.

5. Presse nach einem der Ansprüche 1 bis 3, **dadurch gekennzeichnet, dass** die Spindelmutter eine Verzahnung trägt, die mit einem von dem Motor drehbaren Antriebszahnrad in Eingriff steht.

6. Presse nach Anspruch 5, **dadurch gekennzeichnet, dass** die Spindelmutter eine Kegelradverzahnung trägt und dass das Antriebszahnrad als Kegelrad ausgebildet ist.

7. Presse nach Anspruch 5, **dadurch gekennzeichnet, dass** die Spindelmutter eine Schneckenradverzahnung trägt und dass das Antriebszahnrad als Schnecke ausgebildet ist.

8. Presse nach einem der Ansprüche 1 bis 7, **dadurch gekennzeichnet, dass** die zwischen der Spindel (5, 12) und der Spindelmutter (7, 13) angeordneten kraftübertragenden Wälzkörper als Gewinderollen ausgebildet sind.

9. Presse nach einem der Ansprüche 1 bis 7, **dadurch gekennzeichnet, dass** die zwischen der Spindel (5, 12) und der Spindelmutter (7, 13) angeordneten kraftübertragenden Wälzkörper als Kugeln ausgebildet sind.

10. Presse nach einem der Ansprüche 1 bis 9, **dadurch gekennzeichnet, dass** zusätzliche Funktionen der Reibbelagpresse, wie Ausstoßen des Belags, Ausheben des Belags aus Profilteilen zum Entgasen etc. von dem Spindelantrieb (4) oder von zusätzlichen motorischen Spindelantrieben (10) betätigbar sind.
